# EUROPÄISCHE PATENTANMELDUNG

(11) **EP 2 549 245 A1**
(43) Veröffentlichungstag der Anmeldung: **23.01.2013**
(21) Anmeldenummer: 11174658.2
(22) Anmeldetag: 20.07.2011
(51) Int. Cl.: G01H 1/00

(54) **Verfahren und Vorrichtung zur Überwachung von Wickelkopfschwingungen eines Generators**

(71) Anmelder: Siemens Aktiengesellschaft, 80333 München (DE)
(72) Erfinder: Kreischer, Christian, 44141 Dortmund (DE); Veer, Timot, 47051 Duisburg (DE)

(57) **Zusammenfassung**

Ein Verfahren zur Überwachung von Wickelkopfschwingungen eines Generators (2) umfasst die folgenden Schritte:
- Erfassen von Schwingungen des Wickelkopfes (15) während des Betriebs des Generators;
- Transformieren von Signalen der Schwingungen in den Frequenzbereich;
- Transformieren mehrerer Einzelschwingungen von Frequenzsignalen in den Modalbereich; und
- Bestimmen von Abweichungen der Modalformen und/oder Einzelstabschwingungen zu einem Referenzverhalten.

## Beschreibung

Die Erfindung betrifft im Allgemeinen ein Verfahren und eine Vorrichtung zur Überwachung von Wickelkopfschwingungen eines Generators, insbesondere eines Kraftwerksgenerators.

Die Wickelköpfe von Kraftwerksgeneratoren werden im Betrieb und während elektrischer Störungen zu Schwingungen angeregt. Zu große Schwingungen können zu einer Beschädigung der Wickelköpfe mit Folgen bis hin zu einer Zerstörung des Generators führen.

Bisher wird der Zustand eines Wickelkopfes des Generators in Form von sogenannten Bump-Tests bestimmt, die aufwändig durchzuführen sind. Hierzu muss der zu untersuchende Generator angehalten, das Kühlgas evakuiert und der Generator geöffnet werden. Mit dieser Methode können die Eigenfrequenzen und Eigenformen des Wickelkopfes gut bestimmt werden. Nachteilig ist jedoch, dass sich diese Frequenzen im Betrieb aufgrund der Betriebstemperaturen verschieben und eine Zustandsbeurteilung wirtschaftlich nur in größeren Zeitabständen erfolgen kann. Eine kontinuierliche Aufnahme der Wickelkopfschwingungen an diskreten Positionen findet bereits an einzelnen Wickelköpfen statt, allerdings fehlen geeignete Methoden zur Auswertung.

Es ist Aufgabe der Erfindung, die Überwachung von Wickelkopfschwingungen zu verbessern.

Diese Aufgabe wird gemäß der Erfindung mit den Merkmalen des Anspruchs 1 beziehungsweise 11 gelöst. Vorteilhafte Weiterbildungen der Erfindung sind in den abhängigen Ansprüchen definiert.

Gemäß einem ersten Aspekt betrifft die Erfindung ein Verfahren zur Überwachung von Wickelkopfschwingungen eines Generators, mit den folgenden Schritten:
- Erfassen von Schwingungen des Wickelkopfes während des Betriebs des Generators;
- Transformieren von Signalen der Schwingungen in den Frequenzbereich;
- Transformieren mehrerer Einzelschwingungen von Frequenzsignalen in den Modalbereich; und
- Bestimmen von Abweichungen der Modalformen zu einem Referenzverhalten.

Optional kann zusätzlich eine Signalanalyse im Hinblick auf Systemfehler erfolgen, um einen Sensorcheck zu ermöglichen.

Es wird eine auf einen Wickelkopf zugeschnittene Überwachung bzw. Diagnose der Schwingungen während des Betriebs ermöglicht. Mittels der Modaltransformation lassen sich die Schwingungsinformationen mehrerer Wickelkopfpositionen miteinander verknüpfen und neue auf den Wickelkopf zugeschnittene Beurteilungskriterien definieren. Die Modaltransformation erlaubt eine schnelle, zuverlässige und einfache Analyse des Schwingungsverhaltens des Wickelkopfs. Die Modalformen können mit einem erlernten, betriebsabhängigen Referenzverhalten, welches beispielsweise über ein trainiertes neuronales Netz, numerische Regression basierend auf historischen Daten oder weitere Verfahren zur Nachbildung des Schwingungsverhaltens abgebildet werden kann, verglichen werden. Die Modalform kann durch mathematische Verfahren wie zum Bespiel auch über Riemannsche Summe, Anpassung nach dem Verfahren der kleinsten Fehlerquadratsumme, Polygonzug, Spline-Interpolation und/oder Besselfunktionen, etc. bestimmt werden. Zusätzlich können Einzelstabschwingungen von Wicklungsstäben oder Schaltstäben des Generators betrachtet werden.

Betriebsparameter des Generators, wie Wirkleistung, Blindleistung und/oder Temperatur können erfasst werden. Wesentliche Betriebsparameter, wie Wirkleistung, Blindleistung und/oder Temperatur (zum Beispiel des Kühlgases) in Nähe des Wickelkopfes, werden messtechnisch erfasst und für die Analyse zur Verfügung gestellt. Die Messdaten können zeitlich hochaufgelöst und kontinuierlich aufgenommen werden. Bei der Bestimmung oder der Analyse der Abweichungen zu einem Referenzverhalten werden nun die Betriebsparameter des Generators berücksichtigt, so dass sich Abweichungen unabhängig von den betrieblichen Zuständen separat betrachten lassen.

Signale der Schwingungen und/oder der Betriebsparameter können überprüft und/oder gespeichert werden. Die Signale zu den zeitlichen Schwingungsverläufen sowie zu den Betriebsparametern können auf Plausibilität überprüft und für eine spätere Bewertung regelmäßig oder kontinuierlich (z.B. Ringspeicher vor Ort) abgespeichert werden. Neben absoluten Grenzwerten können auch die zeitlichen Ableitungen der Signale betrachtet werden. Es kann vorgesehen sein, dass der nächste Schritt der Transformation in den Frequenzraum nur bei gültigen Signalen vorgenommen wird. Dies erhöht die Zuverlässigkeit und die Effizienz des Verfahrens und verbessert die Ergebnisse der Modaltransformation.

Messsignale der Schwingungen und/oder der Betriebsparameter können reduziert, überprüft und/oder gespeichert werden. Auch die Frequenzspektren können auf ihre Plausibilität hin überprüft werden. Dies geschieht vor allem durch eine Betrachtung der ersten beiden drehzahlharmonischen Schwingungsanteile und der Summe aller übrigen Frequenzanteile. Dabei kann eine Korrelation mit Betriebsparametern geprüft werden. Vorteilhafterweise wird stets eine Korrelation mit Betriebsparametern geprüft. Durch eine nachfolgende Betrachtung der wesentlichen Frequenzanteile und des Restwertes (Summation der restlichen Frequenzanteile) wird eine Datenreduktion erreicht. Die reduzierten Datensätze können ebenfalls für weitergehende Bewertungen abgespeichert und einer Sensor- und/oder Signalvalidierung unterzogen werden.

Die Transformation in den Modalbereich kann in mehreren Messebenen durchgeführt werden. Wird die Modaltransformation auf mehrere Wickelkopfebenen angewandt, wird das Schwingungsverhalten dreidimensional analysierbar, was die Analyse verbessert.

Die Modalformen und/oder deren Abweichungen können einer Grenzwertbetrachtung unterzogen werden, welche ggf. Warnungen und Alarme für die Bewertung durch einen Experten bzw. ein Expertensystem ausgibt.

Die Modalformen können einer Trendbeobachtung unterzogen werden, welche ggf. Warnungen und Alarme für die Bewertung durch einen Experten bzw. ein Expertensystem ausgibt. Die Trendbeobachtung bewertet absolute Werte sowie sprunghafte oder ungewöhnlich schnelle Änderungen in Betrag und Ausrichtung der Modalformen.

Charakteristische Werte der Modalformen können einem Zähler zugeführt werden. Für die Betrachtung des inkrementellen Lebensdauerverbrauches werden die charakteristischen Werte der Modalformen einem oder mehreren Zählern (Counter) zugeführt. Diese halten die detektierten Beanspruchungen, vor allem in Folge von Betriebsstörungen, fest und ermöglichen hierdurch Aussagen über die Alterung des Wickelkopfes. Da transiente Ausgleichsvorgänge in Folge von Störungen im Netz schnell abklingen, können hierzu die Schwingungsdaten hochaufgelöst und kontinuierlich ausgewertet werden. Im Falle von detektierten Störungen mit transienten Ausgleichsvorgängen können die Zeitsignale aus einem Ringspeicher dauerhaft gespeichert und näher analysiert werden.

Für die Ermittlung von Beanspruchungen in Folge von Betriebsstörungen (Netzfehler, Kurzunterbrechungen, Fehlsynchronisationen usw.) kann eine kontinuierliche Auswertung erfolgen. Die Transformation in den Frequenzbereich kann hierbei zum Beispiel auf kurzen Zeitabschnitten bis 320ms beruhen.

Die Trend-, Grenzwert- und Abweichungsbetrachtung kann sowohl im Zeit- als auch im Frequenzbereich durchgeführt werden.

Basierend auf den Modalformen, den gespeicherten Signalen und/oder den gespeicherten Frequenzsignalen kann eine Bewertung der Wickelkopfschwingungen vorgenommen werden. Damit geht das Verfahren über eine reine Überwachung bzw. Diagnose hinaus und es kann eine Bewertung oder Empfehlung zum Beispiel hinsichtlich verbesserter oder optimaler Betriebsparameter oder der Lebensdauer des Wickelkopfes bzw. des Generators gegeben werden.

Gemäß einem weiteren Aspekt betrifft die Erfindung eine Vorrichtung zur Überwachung von Wickelkopfschwingungen eines Generators, aufweisend mindestens einen Schwingungssensor zur Erfassung von Schwingungen des Wickelkopfs und eine Auswertungseinheit zur Auswertung von Signalen des Sensors, wobei die Auswertungseinheit einen Modaltransformator zur Transformation mehrerer Einzelschwingungen der Signale in den Modalbereich und einen Vergleicher zur Bestimmung von Abweichungen der Modalformen zu einem Referenzverhalten aufweist. Es gelten die gleichen Vorteile und Modifikationen wie für das Verfahren beschrieben.

Der Sensor kann vorzugsweise ein faseroptischer Beschleunigungs- oder Schwingungsaufnehmer oder ein piezoelektrischer Sensor sein. Diese Sensortypen liefern zuverlässige Signale und sind einfach zu installieren.

Die Sensoren können mittig zwischen zwei Wicklungs- oder Schaltstäben des Generators angeordnet sein. Alternativ können die Sensoren nichtmittig oder direkt auf den Stäben angeordnet sein.

Weitere Sensoren für die Erfassung von Betriebsparametern des Generators, wie Wirkleistung, Blindleistung und/oder Temperatur können in Wickelkopfnähe angeordnet und mit der Auswertungseinheit verbunden sein. Dies ermöglicht eine umfassende Analyse unter Berücksichtigung des jeweiligen Betriebszustands.

Der Vergleicher kann eine Auswahleinrichtung zur Auswahl des Referenzverhaltens basierend auf den Betriebsgrößen aufweisen. Damit kann das Referenzverhalten entsprechend der Betriebssituation ausgewählt werden, was die Genauigkeit der Überwachung verbessert.

Im Folgenden wird die Erfindung anhand der Zeichnungen näher beschrieben, in denen zeigen:
- Fig. 1: eine schematische Darstellung einer Vorrichtung zur Überwachung von Wickelkopfschwingungen eines Generators gemäß der Erfindung.
- Fig. 2: ein Ablaufdiagramm eines Verfahrens zur Überwachung von Wickelkopfschwingungen eines Generators gemäß der Erfindung.
- Fig. 3: eine schematische Darstellung der Platzierung von Sensoren am Wickelkopf eines Generators.

Die Zeichnungen dienen lediglich der Erläuterung der Erfindung und schränken diese nicht ein. Die Zeichnungen und die einzelnen Teile sind nicht notwendigerweise maßstäblich. Gleiche Bezugszeichen bezeichnen gleiche oder ähnliche Teile.

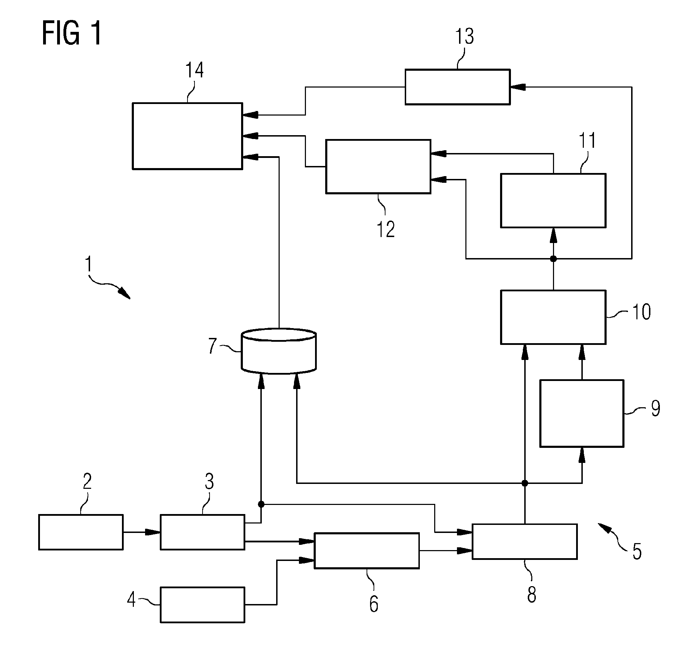

Figur 1 zeigt eine Vorrichtung 1 zur Überwachung von Schwingungen eines Wickelkopfs eines Generators 2. Ein Sensor 3 zum Beispiel ein Schwingungssensor oder Beschleunigungssensor beispielsweise in Form eines faseroptischen Beschleunigungsoder Schwingungsaufnehmers oder eines piezoelektrischen Sensors nimmt Schwingungen des Wickelkopfes oder eines Teils des Wickelkopfes oder anderer Bestandteile des Generators 2, die sich in der Nähe des Wickelkopfes befinden, wie zum Beispiel Wicklungsstäbe oder Schaltstäbe, auf. Zum Beispiel können sechs Sensoren 3 über den Umfang des Wickelkopfes in radialer Ausrichtung verteilt sein.

Weitere Sensorik oder Sensoren 4 erfassen Betriebsparameter des Generators, wie Wirkleistung, Blindleistung und/oder Temperatur in Wickelkopfnähe (z.B. des Kühlgases).

Die Sensoren 3 und 4 sind mit einer Auswertungseinheit 5 der Vorrichtung 1 verbunden. Zunächst sind die Sensoren 3 und 4 mit einer Signalvalidierung 6 verbunden, in welcher alle oder ausgewählte Signale der Sensoren 3 und 4 auf Plausibilität überprüft werden. Dabei wird unter anderem auf Konstanz, Grenzwerte und Rauschen der Signale untersucht. Eine Signalvorverarbeitung kann ebenfalls vorgenommen werden, bei der zum Beispiel Rauschen unterdrückt und/oder Signalpegel angepasst werden. Nicht plausible Signale werden verworfen, falls möglich korrigiert und/oder es wird eine Fehlermeldung oder Warnung ausgegeben. Plausible oder gültige Signale werden weitergeleitet.

Die Sensoren 3 und 4 sind ferner mit einem Speicher 7 der Vorrichtung 1 verbunden. Dies kann zum Beispiel ein Ringspeicher sein, der Rohdaten der Sensoren 3 und 4 speichert oder zwischenspeichert. Die Speicherung kann kontinuierlich oder in Intervallen geschehen. Gegebenenfalls können im Fall von detektierten Störungen mit transienten Ausgleichsvorgängen die Zeitsignale aus einem Ringspeicher dauerhaft gespeichert und näher analysiert werden.

Die Signalvalidierung 6 ist mit einer Aufbereitung 8 verbunden, in der die gültigen Signale durch eine Transformation in den Frequenzbereich zum Beispiel durch eine Fourier-Transformation weiter aufbereitet werden. Durch eine nachfolgende Betrachtung der wesentlichen Frequenzanteile und des Restwertes (Summation der restlichen Frequenzanteile) wird eine Datenreduktion durchgeführt. Die reduzierten Datensätze werden ebenfalls für weitergehende Bewertungen in dem Speicher 7 abgespeichert und einer Sensor- und Signalvalidierung 9 zugeführt. Auch hier werden die Signale auf Gültigkeit überprüft. Nicht plausible Signale werden verworfen, falls möglich korrigiert und/oder es wird eine Fehlermeldung oder Warnung ausgegeben. Plausible oder gültige Signale werden an einen Modaltransformator 10 weitergeleitet. Die unbearbeiteten Signale aus der Aufbereitung 8 werden ebenfalls dem Modaltransformator 10 zugeführt bzw. den nachfolgenden Komponenten zugeführt.

Der Modaltransformator 10 transformiert mehrere Einzelschwingungen der gültigen Signale in den Modalbereich. Im Modalbereich kann unter anderem anhand von Eigenwerten und/oder Eigenfrequenzen eine zuverlässige und aussagekräftige Auswertung der Signale vorgenommen werden.

Die Signale im Modalbereich werden auf mehrere Arten ausgewertet. Die Signale werden einem Vergleicher oder Abweichungsberechnung 11 zugeführt, in dem die Abweichungen der betriebsparameterabhängigen Modalformen zu einem Referenzverhalten (z.B. mittels neuronaler Netze) bestimmt werden. Das Referenzverhalten wird basierend auf den Betriebsparametern ausgewählt oder angepasst, um so eine genaue Abweichung unter Berücksichtigung des Betriebszustands zu erreichen. Dazu kann der Vergleicher 11 eine Auswahleinrichtung enthalten, die in Abhängigkeit von einem oder mehreren Signalen der Betriebsparameter ein entsprechendes Referenzverhalten auswählt. Eine zusätzliche Analyse ist die Trendbeobachtung, welche sprunghafte oder ungewöhnlich schnelle Änderungen in Betrag und Ausrichtung der Modalformen bewertet.

Die Modalformen sowie deren Abweichungen werden nachfolgend einer Grenzwertbetrachtung 12 zugeführt, wo die Signale und/oder deren Abweichungen (erhalten aus dem Vergleicher 11) im Hinblick auf ihre Grenzwerte untersucht werden.

Weiterhin werden die Modalformen einem oder mehreren Zählern 13 zur Betrachtung des inkrementellen Lebensdauerverbrauches zugeführt. Diese halten die detektierten Beanspruchungen, vor allem in Folge von Betriebsstörungen, fest und erlauben hierdurch Aussagen über die Alterung des Wickelkopfes zu treffen. Da transiente Ausgleichsvorgänge in Folge von Störungen im Netz schnell abklingen, ist es förderlich, hierzu die Schwingungsdaten hochaufgelöst und kontinuierlich auszuwerten.

Die Grenzwertbetrachtung 12, der Zähler 13 und der Speicher 7 sind mit einer Bewertungseinheit 14 verbunden, in welcher die Ergebnisse verarbeitet werden. Die Bewertungseinheit 14 kann ein Expertensystem enthalten oder Hinweise, Warnungen und Alarme für die Bewertung durch einen Experten bzw. ein Expertensystem ausgeben. Dies kann zum Beispiel ein Hinweis auf die verbleibende Lebensdauer des Wickelkopfs, die aktuellen Schwingungen, ein Warnung bei gefährlichem Betrieb oder eine Notabschaltung sein.

Die Auswertungen der Signale im Modalbereich können wie dargestellt ablaufen oder nur teilweise oder parallel ablaufen. Ebenso kann der Zähler 13 hinter der Grenzwertbetrachtung 12 angeordnet sein oder der Vergleicher 11 eine direkte Verbindung zu der Bewertungseinheit 14 aufweisen.

Die Auswertungseinheit 5 kann abgesehen von dem Generator 2 und den Sensoren 3 alle in Figur 1 dargestellten Elemente umfassen. Die Auswertungseinheit 5 umfasst mindestens die Aufbereitung 8, den Modaltransformator 10 und den Vergleicher 11.

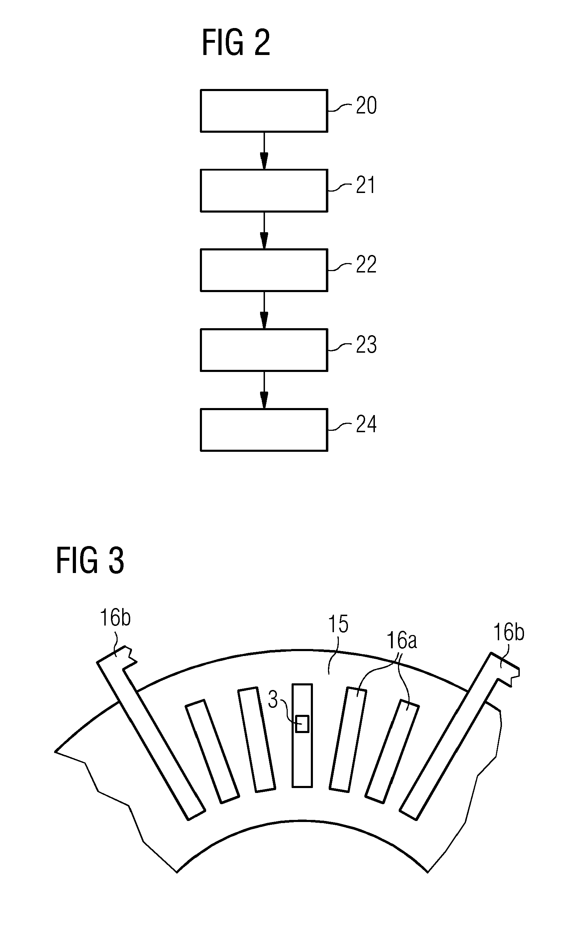

In Figur 2 ist ein Ablaufdiagramm eines Verfahrens zur Überwachung von Wickelkopfschwingungen des Generators 2 gezeigt.

In einem ersten Schritt 20 werden Schwingungen des Wickelkopfes während des Betriebs des Generators 2 erfasst. Zusätzlich können Betriebsparameter des Generators, wie Wirkleistung, Blindleistung und/oder Temperatur erfasst werden. Die Signale der Schwingungen werden in einem zweiten Schritt 21 in den Frequenzbereich transformiert. Optional kann dies erst geschehen, wenn Signale der Schwingungen und/oder der Betriebsparameter überprüft und/oder gespeichert worden sind.

In einem dritten Schritt 22 werden mehrere Einzelschwingungen von Frequenzsignalen in den Modalbereich transformiert. Die Transformation in den Modalbereich kann im vorliegenden Ausführungsbeispiel in bis zu drei Messebenen durchgeführt werden, was eine dreidimensionale Untersuchung ermöglicht. Optional kann die Transformation erst geschehen, wenn Frequenzsignale der Schwingungen und/oder der Betriebsparameter reduziert, überprüft und/oder gespeichert worden sind.

In einem vierten Schritt 23 werden die Modalformen und/oder Einzelstabschwingungen ausgewertet, zum Beispiel durch Bestimmen von Abweichungen der Modalformen und/oder Einzelstabschwingungen zu einem Referenzverhalten, durch Betrachten von Grenzwerten der Modalformen und/oder Einzelstabschwingungen und/oder deren Abweichungen, durch eine Trendbeobachtung der Modalformen und/oder Einzelstabschwingungen und/oder durch die Zuführung charakteristischer Werte der Modalformen und/oder Einzelstabschwingungen zu einem Zähler.

In einem fünften Schritt 24 kann basierend auf den Modalformen, den gespeicherten Signalen und/oder den gespeicherten Frequenzsignalen eine Bewertung der Wickelkopfschwingungen vorgenommen werden. Diese Bewertung oder ein Alarm kann an einen Experten oder ein Expertensystem ausgegeben werden oder es können direkte Eingriffe wie eine Notabschaltung vorgesehen sein.

Fig. 3 zeigt schematisch einen Ausschnitt einer Stirnseite eines Wickelkopfes 15 eines Generators 2. Ein Sensor 3 zur Erfassung von Schwingungen des Wickelkopfs 15 ist mittig zwischen zwei Schaltstäben 16b des Generators 2 auf einem Wicklungsstab 16a angeordnet.

Dieses Ausführungsbeispiel eines Wickelkopfes 15 ist beispielhaft die Ausstattung zu einem 2-poligen Generator mit sechs an den Stirnverbindungen und in radialer Richtung angebrachten Sensoren 3 in Form von faseroptischen Schwingungsaufnehmern, wobei die Sensoren 3 sich bei Anwendung auf der Schaltseite jeweils möglichst mittig in einer Spulengruppe zwischen zwei Schaltstäben 16b befinden und auf einen Stab montiert sind. Neben den Schwingungen werden zusätzlich die Betriebsparameter Wirkleistung, Blindleistung und Kühlgastemperatur in Nähe des Wickelkopfs 15 zeitlich hochaufgelöst und kontinuierlich aufgenommen. Die Zeitrohdaten werden einem Signalcheck unterzogen, um mögliche Störungen in den Messketten zu detektieren. Beispielsweise jede Stunde werden die Zeitrohdaten über sechzehn Umdrehungsperioden des Rotors abgespeichert. Anschließend werden die gültigen Signale einer Fourier-Transformation unterzogen. Die transformierten Daten werden validiert und beispielsweise im Minutentakt abgespeichert. Anschließend findet eine Modaltransformation statt. Die Modalformen werden mit einem erlernten, betriebsabhängigen Referenzverhalten, welches beispielsweise über ein trainiertes neuronales Netz abgebildet werden kann, verglichen. Sowohl die absoluten Kenngrößen der Modalformen und/oder Einzelstabschwingungen, als auch die ermittelten Abweichungen werden einer Grenzwertbetrachtung unterzogen, welche Warnungen und Alarme ausgibt. Grenzwertüberschreitungen werden auch durch einen Zähler erfasst und aufsummiert. Hierdurch werden Informationen zum Alterungszustand des Wickelkopfes 15 bereitgestellt.

## Patentansprüche

1. Verfahren zur Überwachung von Wickelkopfschwingungen eines Generators (2), mit den folgenden Schritten:
- Erfassen von Schwingungen des Wickelkopfes (15) während des Betriebs des Generators;
- Transformieren von Signalen der Schwingungen in den Frequenzbereich;
- Transformieren mehrerer Einzelschwingungen von Frequenzsignalen in den Modalbereich; und
- Bestimmen von Abweichungen der Modalformen und/oder Einzelstabschwingungen zu einem Referenzverhalten.

2. Verfahren nach Anspruch 1,
wobei Betriebsparameter des Generators (2), wie Wirkleistung, Blindleistung und/oder Temperatur erfasst werden.

3. Verfahren nach Anspruch 1 oder 2,
wobei Signale der Schwingungen und/oder der Betriebsparameter überprüft und/oder gespeichert werden.

4. Verfahren nach einem der Ansprüche 1 bis 3,
wobei Messsignale der Schwingungen und/oder der Betriebsparameter reduziert, überprüft und/oder gespeichert werden.

5. Verfahren nach einem der Ansprüche 1 bis 4,
wobei die Transformation in den Modalbereich und/oder Einzelstabschwingungen in mehreren Messebenen durchgeführt wird.

6. Verfahren nach einem der Ansprüche 1 bis 5,
wobei die Modalformen und/oder Einzelstabschwingungen und/oder deren Abweichungen einer Grenzwertbetrachtung unterzogen werden.

7. Verfahren nach einem der Ansprüche 1 bis 6,
wobei die Modalformen und/oder Einzelstabschwingungen einer Trendbeobachtung unterzogen werden.

8. Verfahren nach einem der Ansprüche 1 bis 7,
wobei charakteristische Werte der Modalformen und/oder Einzelstabschwingungen einem Zähler (13) zugeführt werden.

9. Verfahren nach einem der Ansprüche 1 bis 8,
wobei basierend auf den Modalformen und/oder Einzelstabschwingungen, den gespeicherten Signalen und/oder den gespeicherten Frequenzsignalen eine Bewertung der Wickelkopfschwingungen vorgenommen wird.

10. Verfahren nach einem der Ansprüche 1 bis 9,
wobei eine Signalanalyse im Hinblick auf Systemfehler erfolgt.

11. Vorrichtung zur Überwachung von Wickelkopfschwingungen eines Generators (2), aufweisend
mindestens einen Schwingungssensor (3) zur Erfassung von Schwingungen des Wickelkopfs (15) und eine Auswertungseinheit (5) zur Auswertung von Signalen des Sensors (3), wobei die Auswertungseinheit (5) einen Modaltransformator (10) zur Transformation mehrerer Einzelschwingungen der Signale in den Modalbereich und einen Vergleicher (11) zur Bestimmung von Abweichungen der Modalformen und/oder Einzelstabschwingungen zu einem Referenzverhalten aufweist.

12. Vorrichtung nach Anspruch 11,
wobei der Sensor (3) ein faseroptischer Beschleunigungsoder Schwingungsaufnehmer oder ein piezoelektrischer Sensor ist.

13. Vorrichtung nach Anspruch 11 oder 12,
wobei der Sensor (3) mittig zwischen zwei Wicklungsstäben (16a) oder Schaltstäben (16b) des Generators (2) angeordnet ist.

14. Vorrichtung nach einem der Ansprüche 11 bis 13,
wobei weitere Sensoren (4) für die Erfassung von Betriebsparametern des Generators (2), wie Wirkleistung, Blindleistung und/oder Temperatur in Wickelkopfnähe angeordnet und mit der Auswertungseinheit (5) verbunden sind.

15. Vorrichtung nach Anspruch 14,
wobei der Vergleicher (11) eine Auswahleinrichtung zur Auswahl des Referenzverhaltens basierend auf dem Signal mindestens eines weiteren Sensors (4) aufweist.
